# EUROPEAN PATENT APPLICATION

(11) **EP 4 779 130 A1**
(43) Date of publication of application: **22.07.2026**
(21) Application number: 26152631.3
(22) Date of filing: 19.01.2026
(51) Int. Cl.: F01D 21/00, F01D 21/02, F01D 21/04

(54) **DUAL SPEED OR POSITION PROBE-BASED SHAFT SHEAR DETECTION**

(30) Priority: 17.01.2025 US 202519030441
(71) Applicant: Pratt & Whitney Canada Corp., (01BE5) Longueuil, QC J4G 1A1 (CA)
(72) Inventor: HEYERMAN, Jeffrey, (01BE5) Longueuil, J4G 1A1 (CA); TOMES, Nathan, (01BE5) Longueuil, J4G 1A1 (CA)
(74) Representative: Dehns

(57) **Abstract**

A system for detecting a shaft shear comprises a gas turbine engine (102) having a turbine (208), a high inertia rotating component (210) and a driveshaft (212). The turbine (208) drives the high inertia rotating component (210) using the driveshaft (212). A first speed probe (202) is configured to detect a first speed of the driveshaft (212) at a first location associated with the driveshaft (212). A second speed probe (204) is configured to detect a second speed of the driveshaft (212) at a second location associated with the driveshaft (212). Control circuitry (302, 304) is configured to compare the first speed and second speed, determine if the shaft shear has occurred responsive to the comparison and generate a control signal to the gas turbine engine (102) responsive to the determination.

## Description

### TECHNICAL FIELD

This disclosure relates generally to a system and method for shaft shear detection. More specifically, this disclosure relates to the use of dual probes for the detection of shaft shear.

### BACKGROUND

Gas turbine engines generally drive compressors with a shaft using power extracted by a turbine. If the shaft breaks the turbine can rapidly accelerate leading to an over speed condition which if not controlled could lead to a catastrophic failure in the form of a disk of the turbine bursting at high speeds.

One prior solution to this problem involves designing the turbine blades to fail under centrifugal loading well before the disk containing the turbine blades would burst. This requires significant burst margin leading to a heavy design for the turbine. Another prior art solution uses a mechanical feature near the end of the shaft in the downstream direction to trigger a fuel shutoff valve when the turbine moves downstream due to pressure loading when the shaft breaks. This solution is not favored since latent failures in the system are not detectable and the mechanical features are subjected to high temperatures in the exhaust area of the engine. A third solution uses a speed or torque sensor on the gas turbine engine to detect either a change in speed or a change an output torque to identify a failure in the shaft electronically and then use a high speed solenoid valve to shut off the fuel to the gas turbine engine. This prevents further turbine acceleration. This solution, depending on the engine, can require substantial time to detect the failure reliably while avoiding false positives which would lead to in-flight shutdowns. This lag time leads to a higher over speed condition on the turbine and higher weight overall. Depending on the configuration, it can also be difficult to predict the torque signal, making design and validation of the software difficult.

Thus, a solution overcoming the problems involved with these prior art solutions would be of great benefit within gas turbine engine designs with respect to shaft shear detection.

### SUMMARY

This invention relates to a dual probe system for detecting shaft shear.

In an aspect of the present invention, a system for detecting a shaft shear includes a gas turbine engine may include a turbine, a high inertia rotating component and a driveshaft, where the turbine drives the high inertia rotating component using the driveshaft a first speed probe configured to detect a first speed of the driveshaft at a first location associated with the driveshaft, a second speed probe configured to detect a second speed of the driveshaft at a second location associated with the driveshaft and control circuitry configured to compare the first speed and second speed, determine if the shaft shear has occurred responsive to the comparison and generate a control signal to the gas turbine engine responsive to the determination.

Any single one or any combination of the following features may be used with the examples above. The system where the first speed probe is placed near the high inertia rotating component to measure the first speed of the driveshaft. The second speed probe is place on the driveshaft at a remote location from the high inertia rotating component to measure the second speed of the driveshaft. The first speed probe is located on the high inertia rotating component to measure the first speed of the driveshaft. The high inertia rotating component is a fan of the gas turbine engine. The control circuitry further may include torsional oscillation logic for detecting a difference between a signal provided from the first speed probe and a signal provided from the second speed probe indicating the shaft shear and generating an indication signal responsive to the detected difference between the signal provided from the first speed probe and the signal provided from the second speed probe. The control circuitry further may include a controller configured to receive the indication signal and generate a control signal to shut down a fuel flow to the gas turbine engine. The control circuitry further may include a controller configured to generate a control signal to shut down fuel flow to the gas turbine engine responsive to a difference between a signal provided from the first speed probe and a signal provided from the second speed probe indicating the shaft shear.

In another aspect of the present invention, a method for detecting a shaft shear includes placing a first speed probe at a first location associated with a driveshaft of a gas turbine engine drive driving a high inertia rotating component responsive to rotation of a turbine, detecting a first speed of the driveshaft at the first location associated with the driveshaft using the first speed probe, placing a second speed probe at a second location associated with the driveshaft of a gas turbine engine driving the high inertia rotating component responsive to rotation of the turbine, detecting a second speed of the driveshaft at the second location associated with the driveshaft using the second speed probe, comparing the first speed and second speed at control circuitry, determining at the control circuitry if the shaft shear has occurred responsive to the comparison of the first speed and the second speed, and generating a control signal to the gas turbine engine responsive to the determination.

Any single one or any combination of the following features may be used with the examples above. The method where the step of placing the first speed probe may include placing the first speed probe near the high inertia rotating component to measure the first speed of the driveshaft. The step of placing the second speed probe may include placing the second speed probe on the driveshaft at a remote location from the high inertia rotating component to measure the second speed of the driveshaft. The step of placing the first speed probe may include placing the first speed probe on the high inertia rotating component to measure the first speed of the driveshaft. The high inertia rotating component is a fan of the gas turbine engine. The step of determining at the control circuitry if the shaft shear has occurred further may include detecting a difference between a signal provided from the first speed probe and a signal provided from the second speed probe indicating the shaft shear using a torsional oscillation logic and generating an indication signal responsive to the detected difference between the signal provided from the first speed probe and the signal provided from the second speed probe. The step of determining at the control circuitry if the shaft shear has occurred further may include receiving the indication signal at a controller and generating a control signal to shut down a fuel flow to the gas turbine engine at the controller responsive to the indication signal. The step of generating the control signal further may include generating the control signal to shut down fuel flow to the gas turbine engine responsive to a difference between a signal provided from the first speed probe and a signal provided from the second speed probe indicating the shaft shear.

In another aspect of the present invention, a system for detecting a shaft shear includes a gas turbine engine which may include a turbine, a fan and a driveshaft, where the turbine drives the fan using the driveshaft, a first speed probe configured to detect a first speed of the driveshaft at a first location on the driveshaft near the fan, a second speed probe configured to detect a second speed of the driveshaft at a second location on the driveshaft remote from the fan and control circuitry configured to compare the first speed and second speed, determine if the shaft shear has occurred responsive to the comparison and generate a control signal to the gas turbine engine responsive to the determination.

Any single one or any combination of the following features may be used with the examples above. The system where the control circuitry further may include torsional oscillation logic for detecting a difference between a signal provided from the first speed probe and a signal provided from the second speed probe indicating the shaft shear and generating an indication signal responsive to the detected difference between the signal provided from the first speed probe and the signal provided from the second speed probe. The control circuitry further may include a controller configured to receive the indication signal and generate a control signal to shut down a fuel flow to the gas turbine engine. The control circuitry further may include a controller generate a control signal to shut down fuel flow to the gas turbine engine responsive to a difference between a signal provided from the first speed probe and a signal provided from the second speed probe indicating the shaft shear.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates an example gas turbine engine;
FIGURE 2 illustrates the placement of a sensor pair with respect to a driveshaft between a fan and turbine of a gas turbine engine;
FIGURE 3 illustrates interconnection between a sensor pair and a gas turbine engine controller;
FIGURE 4 illustrates an alternative embodiment of placement of the sensor pair with respect to the gas turbine engine powertrain; and
FIGURE 5 illustrates a flow diagram of the process for detecting a shaft shear by a gas turbine engine controller responsive to input from the sensor pair.

### DETAILED DESCRIPTION

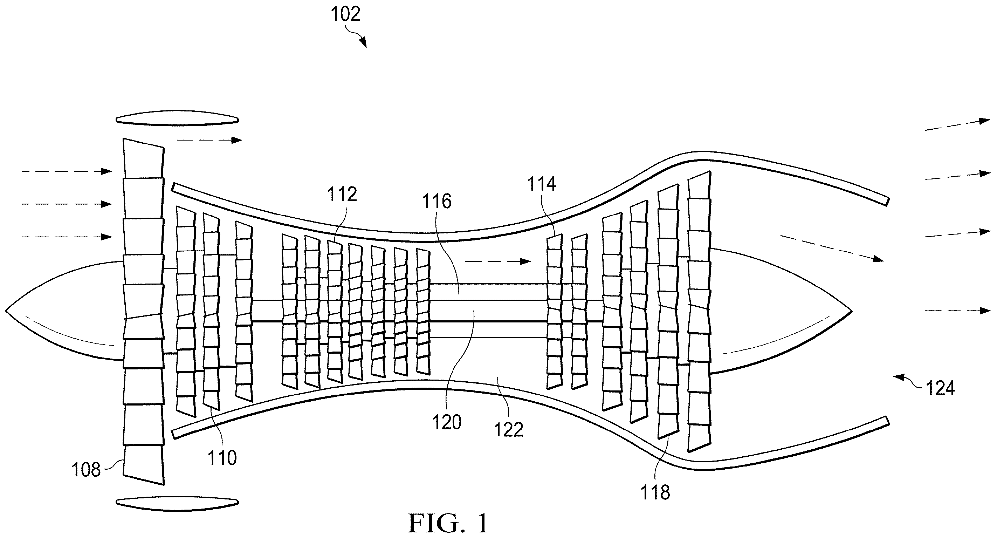

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates an example gas turbine engine 102 which may have dual sensors place therein for shaft shear detection. The gas turbine engine 102 comprises a fan 108 connected to a low-pressure compressor 110 and a high-pressure compressor 112. The high-pressure compressor 112 is connected to a high-pressure turbine 114. The high-pressure turbine 114 drives the high-pressure compressor 112 via a high-pressure shaft 116. A low-pressure turbine 118 is connected to the low-pressure compressor 110 via a low-pressure shaft 120. The low-pressure turbine 118 drives the low-pressure compressor 110 and the fan 108 via the rotation of the low-pressure shaft 120. The high-pressure turbine 114 drives the high-pressure compressor 112 by rotation of the high-pressure shaft 116. Rotation of the fan 108 draws air into the gas turbine engine 102. A portion of the air passes through the low-pressure compressor 110 and high-pressure compressor 112 wherein the air is compressed prior to combustion within the combustion chamber 122. The exhaust from the combustion chamber 122 drives the high-pressure turbine 114 and low-pressure turbine 118 and is exhausted out of the nozzle 124. It will be understood that the gas turbine engine 102 shown in FIGURE 1 is an example for illustrative purposes. This disclosure is not limited to any particular configuration of a gas turbine engine.

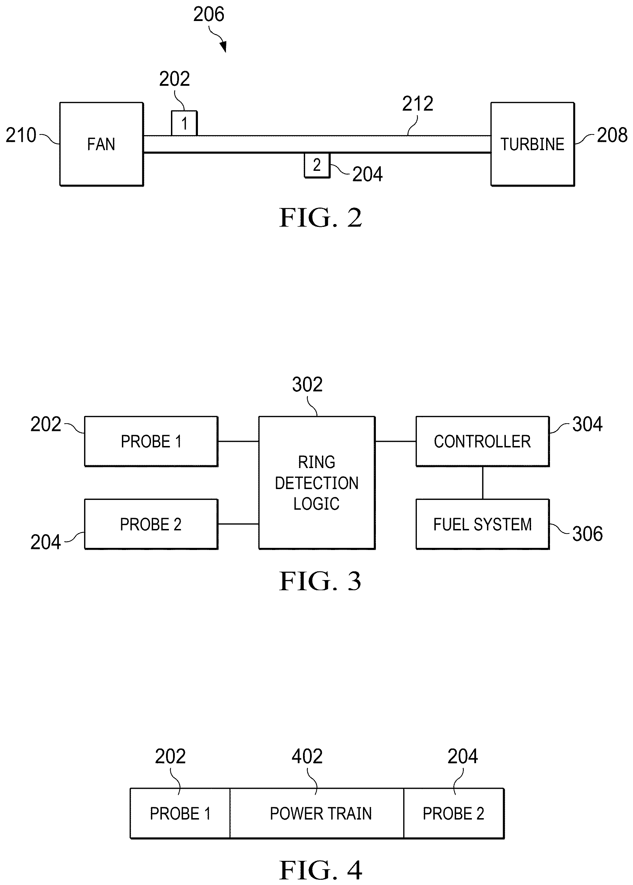

FIGURE 2 illustrates placement of a first speed probe 202 and a second speed probe 204 with respect to a spool 206 of a gas turbine engine as illustrated in FIGURE 1. The spool 206 consist of a turbine 208 that drives a fan 210 through a driveshaft 212. The spool 206 consist of the turbine 208, the driveshaft 212 and the fan 210. By using the first speed probe 202 and the second speed probe 204 a shaft shear occurrence of the driveshaft 212 may be detected. In one example, the first speed probe 202 may be located at a location near a point providing high inertial movement of a rotating part that is not subject to twist/torsional oscillation. The second speed probe 204 may be located on a section of the driveshaft 212 subject to torsional twist and oscillation. The first speed probe 202 is located on or near the fan 210 or and other high inertia rotating component of the spool 206. The second speed probe 204 is located on the driveshaft 212 away from any high inertia rotating parts such as the fan 210. When shaft shear occurs, the fracture will excite the torsional modes on the intact rotating assembly still connected to the turbine 208. The speed signal of the second speed probe 204 located on the driveshaft 212 will oscillate responsive to the shaft shear, while the speed signal on the first speed probe 202 near the high inertia component (the fan 210) will remain substantially steady.

Referring now to FIGURE 3, there is illustrated the control logic associated with the first speed probe 202 and second speed probe 204. Detecting the difference between the speed signal of the first speed probe 202 and be speed signal of the second speed probe 204 will enable the creation of a signal which can be inspected using torsional oscillation logic 302. The signal will result in faster detection, lower over speed conditions, and lighter engines. When the torsional oscillation logic 302 detects a shaft shear is indicated by the signal, the engine controller 304 (EEC, FEC, etc.) is notified and the controller may then take action to cutoff fuel by sending control signals to the fuel system 306. A shaft shear will cause a rapid deceleration that will be perceived by probe 202, in addition probe 204 (if located forward of the sheared location) will have the same deceleration but also a torsional oscillation superimposed on the signal. There are various detection algorithms that may be employed to detect the oscillations. In one example, based on what is read by probe 202 at the fan 210, a prediction is made of what should be read at the probe 204 at the shaft assuming an intact system and compare against what is actually read. A certain number of points of a certain "error" from expectation would mean shaft shear. With a single probe system having the probe located in a shaft portion that is subject to torsional ring, it is too difficult to divorce false positives from what is processed if only using the shaft oscillations and it becomes necessary to both filter the signal and wait a sufficient time to ensure deceleration is not from a bird strike or surge. With just one probe at the fan, a rapid decision between a deceleration due to bird strike or surge from a rapid deceleration due to shear cannot be made.

The torsional oscillation logic 302 will implement an algorithm to compare the signal from the shaft located probe 204, where the shaft undergoes torsional oscillation from the sudden release of torque and the signal from the probe 202 reading the "high inertia" component which acts like ground and does not exhibit high frequency oscillations. Use of multiple probes rather than a single shaft probe helps overcome difficulties distinguishing events such as bird strike (where the engine should not be shutdown) from shaft shear, where the engine should shut down.

Referring now to FIGURE 4, there is illustrated an alternative embodiment wherein the first speed probe 202 and the second speed probe 204 are located on opposite sides of a power train 402. In this configuration, if shaft shear occurs, the speed probes 202, 204 will diverge and shaft shear control logic is triggered. On most gas turbine engines this would require router electronics through very harsh environment such as the turbine or exhaust area causing reliability problems. This is not the case on some reverse flow architectures, where the output driveshaft 212 is connected on one side of the low-pressure turbine and the compressor is attached on the other. In this case, speed probes 202, 204 on the output driveshaft 212 and near the compressor could be located away from harsh environments. In this case, it may also be possible to detect torque developed in the engine using position sensors (encoders) instead of speed sensors.

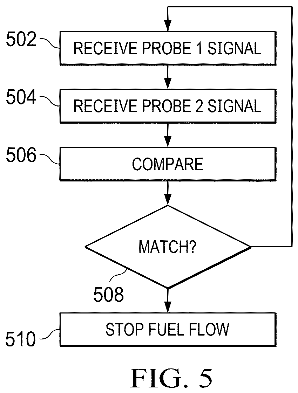

FIGURE 5 illustrates a flow diagram of the control process by which fuel flow may be controlled using the dual speed probes. A speed signal is received at step 502 from probe 1202 that is located near the high inertial component (fan 210). The second speed signal is received at step 504 from the speed probe 204 that is located on the driveshaft 212. The speed signals from the first speed probe 202 and the second speed probe 204 are compared at inquiry step 508 to determine if they match or have a difference. As discussed previously, the speed signal from the speed probe 204 will abnormally oscillate responsive to a shaft shear while the speed signal from the speed probe 202 will remain steady. If the speed signals match, no shaft shear is indicated, and control passes back to step 502. If inquiry step 508 determines that the speed signals do not match and the speed signal from speed probe 204 is oscillating, an indication of a shaft shear has occurred, and control signals may be sent to the fuel system to stop the fuel flow at step 510. It will be appreciated the probe 204 associated with the shaft may still be subject to oscillations (i.e. in the case of a bird strike) but the oscillations will be associated with the intact system and will be much lower frequency then following shaft shear that will cause abnormal oscillations.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A system for detecting a shaft shear, comprising:
a gas turbine engine (102) comprising a turbine (208), a high inertia rotating component (210) and a driveshaft (212), wherein the turbine (208) drives the high inertia rotating component (210) using the driveshaft (212);
a first speed probe (202) configured to detect a first speed of the driveshaft (212) at a first location associated with the driveshaft (212);
a second speed probe (204) configured to detect a second speed of the driveshaft (212) at a second location associated with the driveshaft (212); and
control circuitry (302, 304) configured to compare the first speed and second speed, determine if the shaft shear has occurred responsive to the comparison and generate a control signal to the gas turbine engine (102) responsive to the determination.

2. The system of Claim 1, wherein the second speed probe (204) is placed on the driveshaft (212) at a remote location from the high inertia rotating component (210) to measure the second speed of the driveshaft (212).

3. The system of Claim 1 or 2, wherein the first speed probe (202) is placed near the high inertia rotating component (210) to measure the first speed of the driveshaft (212).

4. The system of Claim 1 or 2, wherein the first speed probe (202) is located on the high inertia rotating component (210) to measure the first speed of the driveshaft (212).

5. The system of any preceding claim, wherein the high inertia rotating component is a fan (210) of the gas turbine engine (102).

6. The system of any preceding claim, wherein the control circuitry (302, 304) comprises torsional oscillation logic (302) for detecting a difference between a signal provided from the first speed probe (202) and a signal provided from the second speed probe (204) indicating the shaft shear and generating an indication signal responsive to the detected difference between the signal provided from the first speed probe (202) and the signal provided from the second speed probe (204).

7. The system of Claim 6, wherein the control circuitry (302, 304) further comprises a controller (304) configured to receive the indication signal and generate a control signal to shut down a fuel flow to the gas turbine engine (102).

8. The system of any of Claims 1 to 5, wherein the control circuitry (302, 304) comprises a controller (304) configured to generate a control signal to shut down fuel flow to the gas turbine engine (102) responsive to a difference between a signal provided from the first speed probe (202) and a signal provided from the second speed probe (204) indicating the shaft shear.

9. A method for detecting a shaft shear, comprising:
placing a first speed probe (202) at a first location associated with a driveshaft (212) of a gas turbine engine (102) driving a high inertia rotating component (210) responsive to rotation of a turbine (208);
detecting a first speed of the driveshaft (212) at the first location associated with the driveshaft (212) using the first speed probe (202);
placing a second speed probe (204) at a second location associated with the driveshaft (212) of a gas turbine engine (102) driving the high inertia rotating component (210) responsive to rotation of the turbine (208);
detecting a second speed of the driveshaft (212) at the second location associated with the driveshaft (212) using the second speed probe (204);
comparing the first speed and second speed at control circuitry (302, 304);
determining at the control circuitry (302, 304) if the shaft shear has occurred responsive to the comparison of the first speed and the second speed; and
generating a control signal to the gas turbine engine (102) responsive to the determination.

10. The method of Claim 9, wherein the step of placing the first speed probe (202) comprises placing the first speed probe (202) near or on the high inertia rotating component (210) to measure the first speed of the driveshaft (212).

11. The method of Claim 9 or 10, wherein the step of placing the second speed probe (204) comprises placing the second speed probe (204) on the driveshaft (212) at a remote location from the high inertia rotating component (210) to measure the second speed of the driveshaft (212).

12. The method of Claim 9, 10 or 11, wherein the high inertia rotating component is a fan (210) of the gas turbine engine (102).

13. The method of any of Claims 9 to 12, wherein the step of determining at the control circuitry (302, 304) if the shaft shear has occurred comprises:
detecting a difference between a signal provided from the first speed probe (202) and a signal provided from the second speed probe (204) indicating the shaft shear using a torsional oscillation logic (302); and
generating an indication signal responsive to the detected difference between the signal provided from the first speed probe (202) and the signal provided from the second speed probe (204).

14. The method of Claim 13, wherein the step of determining at the control circuitry (302, 304) if the shaft shear has occurred further comprises:
receiving the indication signal at a controller (304); and
generating a control signal to shut down a fuel flow to the gas turbine engine (102) at the controller (304) responsive to the indication signal.

15. The method of any of Claims 9 to 12, wherein the step of generating the control signal comprises generating the control signal to shut down fuel flow to the gas turbine engine (102) responsive to a difference between a signal provided from the first speed probe (202) and a signal provided from the second speed probe (204) indicating the shaft shear.
